# EUROPÄISCHE PATENTANMELDUNG

(11) **EP 4 235 472 A1**
(43) Veröffentlichungstag der Anmeldung: **30.08.2023**
(21) Anmeldenummer: 22168793.2
(22) Anmeldetag: 19.04.2022
(51) Int. Cl.: G06F 21/57, H04L 9/40, G06F 21/56

(54) **VERFAHREN UND EIN SYSTEM ZUR DURCHFÜHRUNG EINES IT-SICHERHEITSTESTS**

(30) Priorität: 28.02.2022 DE 102022202020
(71) Anmelder: Siemens Aktiengesellschaft, 80333 München (DE)
(72) Erfinder: Lukas, Klaus, 81739 München (DE); Pröll, Thomas, 81737 München (DE); Riedmüller, Reinhard, 81735 München (DE)
(74) Vertreter: Siemens Patent Attorneys

(57) **Zusammenfassung**

Das Verfahren ist ein Verfahren zum Durchführen eines IT-Sicherheitstests eines Geräts. Bei dem Verfahren wird eine Datenbank mit einer oder mehreren Geräteeigenschaften zumindest des Geräts herangezogen und es wird eine Menge von Einzeltestkandidaten herangezogen, mittels welchen der IT-Sicherheitstest bildbar ist, wobei die Einzeltestkandidaten spezifisch für die eine oder mehreren Geräteeigenschaften sind. Bei dem Verfahren werden diejenigen Einzeltestkandidaten ausgewählt, welche für die eine oder mehreren Geräteeigenschaften des Geräts spezifisch sind und der IT-Sicherheitstest des Geräts wird mit den ausgewählten Einzeltestkandidaten als Einzeltests durchgeführt.

## Beschreibung

Die Erfindung betrifft ein Verfahren und ein System zur Durchführung eines IT-Sicherheitstests.

Es ist bekannt, Geräte mittels Testplattformen IT-Sicherheitstests zu unterziehen. Regelmäßig werden die Geräte dazu mittels einer Datenverbindung mit einer Testplattform zur Durchführung des IT-Sicherheitstests verbunden. Während das Gerät im Regelfall über die Datenverbindung ansprechbar bleibt, kann es in jedoch bestimmten Fällen passieren, dass das Gerät nicht mehr ansprechbar ist und nicht in gewohnter Weise reagiert. In diesen Fällen können IT-Sicherheitstests eine geringere Zuverlässigkeit aufweisen.

Es ist daher Aufgabe der Erfindung, ein Verfahren zur Durchführung eines IT-Sicherheitstests anzugeben, mittels welchem IT-Sicherheitstests von Geräten verbessert, insbesondere zuverlässiger, durchgeführt werden können. Ferner ist es Aufgabe der Erfindung, ein System zur Durchführung eines IT-Sicherheitstests anzugeben, mittels welchem das verbesserte Verfahren zur Durchführung eines IT-Sicherheitstests durchführbar ist.

Diese Aufgabe der Erfindung wird mit einem Verfahren zur Durchführung eines IT-Sicherheitstests mit den in Anspruch 1 angegebenen Merkmalen sowie mit einem System zur Durchführung eines IT-Sicherheitstests mit den in Anspruch 10 angegebenen Merkmalen und mit einer Fertigungs- oder Wartungs- oder Logistikanlage mit den in Anspruch 15 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Durchführung eines IT-Sicherheitstests eines Geräts mittels einer Datenverbindung, insbesondere einer Netzwerkverbindung, wird der IT-Sicherheitstest des Geräts durchgeführt und es wird bei der Durchführung des IT-Sicherheitstests ein Datenfeedback des Geräts mittels der Datenverbindung erfasst und es wird ein Gerätezustand des Geräts zusätzlich optisch und/oder akustisch erfasst und es wird das Datenfeedback unter Berücksichtigung des erfassten Gerätezustand ausgewertet. Mittels der optischen und/oder akustischen Erfassung des Gerätezustands des Geräts stehen zusätzlich zur Datenverbindung optische und/oder akustisch erfasste Informationen über den Gerätezustand zur Verfügung, sodass in solchen Fällen, in welchen Datenfeedback ausbleibt oder Datenfeedback anders auftritt als erwartet, der Gerätezustand herangezogen werden kann. Mittels des zusätzlich herangezogenen Gerätezustands kann auch bei einem ausbleibenden Datenfeedback geschlossen werden, ob das Gerät nach wie vor einsatzbereit ist oder ob sich das Gerät in einem gestörten Funktionszustand befindet. Wenn sich das Gerät während des IT-Sicherheitstests in einem gestörten Funktionszustand befindet, kann die Information über das Vorliegen des gestörten Funktionszustands des Geräts in den IT-Sicherheitstest als zusätzliches Testergebnis des IT-Sicherheitstests in die Auswertung es IT-Sicherheitstests eingehen.

Bei dem erfindungsgemäßen Verfahren wird vorzugsweise optisch und/oder akustisch mittels mindestens eines Erfassungsmittels, insbesondere mittels mindestens einer Kamera und/oder mittels mindestens eines Mikrofons, erfasst. Besonders bevorzugt werden mittels des Erfassungsmittels eine oder mehrere Benutzerschnittstellen des Geräts erfasst. So kann mittels einer Erfassung der Benutzerschnittstellen des Geräts leicht auf den Gerätezustand des Geräts zurückgeschlossen werden. Vorzugsweise können bei dem erfindungsgemäßen Verfahren eine graphische Benutzeroberfläche oder akustische Signale für Benutzer erfasst werden. So können mittels graphischer Benutzeroberflächen Mitteilungen, insbesondere Warnsignale oder Warnmeldungen oder Alarmmeldungen dargestellt werden, welche mittels der Erfassungsmittel leicht erfasst werden können. Auch können akustische Warnsignale oder Warnmeldungen, etwa Alarmtöne wie insbesondere Alarmsummer, leicht erfasst werden. Solche graphischen oder akustischen Warnsignale erlauben einen zuverlässigen Rückschluss auf einen nicht vorgesehenen Gerätezustand des Geräts.

Besonders bevorzugt wird bei dem erfindungsgemäßen Verfahren der Gerätezustand des Geräts derart optisch und akustisch erfasst, dass das Gerät auf periodische optische und/oder akustische Signale und/oder eine bestimmte Kombination von optischen und/oder akustischen Signalen und dem Datenfeedback überwacht wird. Gerade periodische optische und/oder akustische Signale ermöglichen regelmäßig einen Schluss auf bestimmte Fehlerzustände des Geräts, etwa blinkende optische Signale wie insbesondere Warnleuchten oder periodische akustische Signale, insbesondere periodische Warnsummer, etwa im Safety-Bereich. Zudem können bestimmte optische und/oder akustische Signale mit einem bestimmten Datenfeedback einhergehen. So können etwa bestimmte optische oder akustische Warnsignale, die etwa einen Fehlerzustand des Geräts anzeigen, mit einem bestimmten charakteristischen Datenfeedback einhergehen. Diese Kombination von akustischen und/oder optischen Signalen mit dem Datenfeedback kann daher zuverlässig zum Schluss auf den Gerätezustand des Geräts herangezogen werden.

Bei dem erfindungsgemäßen Verfahren umfasst das Datenfeedback Feedbackdaten und/oder die Information, ob Feedbackdaten erhalten werden oder ob keine oder weniger Feedbackdaten erhalten werden als erwartet. So kann ein Datenfeedback einerseits Feedbackdaten des Geräts umfassen, die das Gerät als Antwort auf Eingangsdaten des Geräts bildende Testdaten ausgibt. Zudem kann ein Datenfeedback auch das Ausbleiben von Feedbackdaten bedeuten, insbesondere in solchen Situationen, in welchen Feedbackdaten erwartet werden. Auch in solchen Situationen kann das Ausbleiben von Feedbackdaten eine Feedbackinformation des Geräts umfassen.

Bei dem erfindungsgemäßen Verfahren wird der erfasste Gerätezustand bevorzugt herangezogen, eine Sicherheitsinformation aus dem Datenfeedback in Abhängigkeit des Gerätezustands abzuleiten. Aus der Kombination des Gerätezustands mit dem Datenfeedback lässt sich eine Sicherheitsinformation wesentlich zuverlässiger gewinnen als aus dem Datenfeedback allein. Insbesondere kann ein Gerätezustand mit einem zeitgleich oder zeitlich vorhergehenden Datenfeedback in Beziehung gesetzt werden und so ein Einfluss oder eine Korrelation des Datenfeedbacks mit dem Gerätezustand berücksichtigt werden.

Bei dem Verfahren gemäß der Erfindung wird zweckmäßig der erfasste Gerätezustand herangezogen, das Gerät in Abhängigkeit des Gerätezustands zu bedienen, insbesondere das Gerät zurückzusetzen. Wird anhand des erfassten Gerätezustands auf einen gestörten Gerätezustand des Geräts geschlossen, so kann mittels dieser Weiterbildung des erfindungsgemäßen Verfahrens das Gerät zurückgesetzt werden. Zweckmäßig wird dazu ein Aktor herangezogen, welcher einen Rücksetzvorgang initiiert, insbesondere mittels einer Bedienung einer Rücksetztaste oder mittels eines Rücksetzfeldes eines Touchscreens oder mittels einer Unterbrechung einer elektrischen Versorgung oder mittels einer Verursachung eines elektrischen Kurzschlusses.

Vorzugsweise wird in einer bevorzugten Weiterbildung des erfindungsgemäßen Verfahrens der erfasste Gerätezustand herangezogen, um das Gerät in einen sicheren Betriebsmodus zu versetzen und/oder einer Softwareaktualisierung zu unterziehen und/oder in einen anderen Betriebzustand zu versetzen und/oder außer Betrieb zu nehmen und/oder auszuschalten oder in einen Ruhezustand zu versetzen und/oder umzukonfigurieren

In einer vorteilhaften Weiterbildung der Erfindung kann bei dem Verfahren der erfasste Gerätezustand herangezogen werden, um einen oder mehrere weitere, insbesondere vom Gerätezustand abgeleitete, IT-Sicherheitstests durchzuführen. Insbesondere wird in dieser Weiterbildung der Erfindung der erfasste Gerätezustand zur Durchführung und/oder zur Konfiguration und/oder zur Auswahl des oder der weiteren IT-Sicherheitstests und/oder zu einer Auswertung des oder der weiteren IT-Sicherheitstests berücksichtigt.

Geeigneterweise wird bei dem erfindungsgemäßen Verfahren der Gerätezustand erfasst, indem ein akustisches Signal des Geräts, insbesondere ein Alarmsignal des Geräts und/oder ein optisches Signal des Geräts, insbesondere eine Anzeige des Geräts, erfasst wird. Vorteilhaft können optische Signale und/oder akustische Signale zur Erfassung des Gerätezustands in einer leicht zu klassifizierenden Weise herangezogen und mit einem Gerätezustand in Beziehung gesetzt werden.

Das erfindungsgemäße System zur Durchführung eines IT-Sicherheitstests eines Geräts zur Durchführung eines Verfahrens wie oben beschrieben weist eine Kommunikationsschnittstelle für eine Datenverbindung mit dem Gerät auf und weist eine Testeinrichtung zur Durchführung des IT-Sicherheitstests, welche ausgebildet ist, ein Datenfeedback des Geräts zu erfassen, auf und weist mindestens ein Erfassungsmittel zur optischen und/oder akustischen Erfassung des Gerätezustands und eine Auswerteinrichtung, die ausgebildet ist, das Datenfeedback unter Berücksichtigung des erfassten Gerätezustands auszuwerten, auf. Das erfindungsgemäße System ist zur Ausführung eines erfindungsgemäßen Verfahrens wie oben beschrieben ausgebildet und weist in entsprechender Weise die bereits zum erfindungsgemäßen Verfahren erläuterten Vorteile auf.

Das erfindungsgemäße System ist zur Durchführung eines IT-Sicherheitstests eines Geräts mit einer graphischen und/oder optischen und/oder akustischen Benutzerschnittstelle ausgebildet, wobei das mindestens eine Erfassungsmittel zur Erfassung der Benutzerschnittstelle ausgebildet ist. Insbesondere optische und/oder akustische Benutzerschnittstellen sind leicht mit zur optischen oder akustischen Erfassung ausgebildeten Erfassungsmitteln erfassbar.

Bei dem erfindungsgemäßen System weist das mindestens eine Erfassungsmittel mindestens eine Kamera und/oder mindestens ein Mikrofon auf.

Das erfindungsgemäße System weist mindestens einen Aktor, ausgebildet zur Bedienung des Geräts in Abhängigkeit des Gerätezustands, auf. Vorzugsweise ist ein solcher Aktor zur Bedienung einer Rücksetztaste oder eines Rücksetzfelds auf einem Touchscreen ausgebildet.

Das erfindungsgemäße System ist zur Durchführung eines IT-Sicherheitstests eines Geräts mit mindestens einer Benutzerschnittstelle ausgebildet, wobei der Aktor eingerichtet ist, die mindestens eine Benutzerschnittstelle des Geräts zu bedienen.

Die erfindungsgemäße Fertigungsanlage und/oder Wartungsanlage und/oder Logistikanlage weist ein erfindungsgemäßes System wie vorhergehend beschrieben auf. Zweckmäßig umfasst die erfindungsgemäße Fertigungsanlage und/oder Wartungsanlage und/oder Logistikanlage zudem das Gerät, welches vorzugsweise ein Steuergerät und/oder ein Fertigungsgerät und/oder ein Wartungsgerät und/oder ein Logistikgerät, zweckmäßig ein Fertigungswerkzeug und/oder Fertigungsroboter und/oder ein Wartungswerkzeug und/oder ein Wartungsroboter und/oder ein Logistikwerkzeug und/oder ein Logistikroboter und/oder Logistikfahrzeug ist.

Nachfolgend wird die Erfindung anhand eines in der Zeichnung dargestellten Ausführungsbeispiels näher erläutert. Die einzige Zeichnungsfigur 1 zeigt einen Ablauf eines erfindungsgemäßen Verfahrens zum Durchführen eines IT-Sicherheitstests eines Geräts, schematisch in einem Ablaufdiagramm.

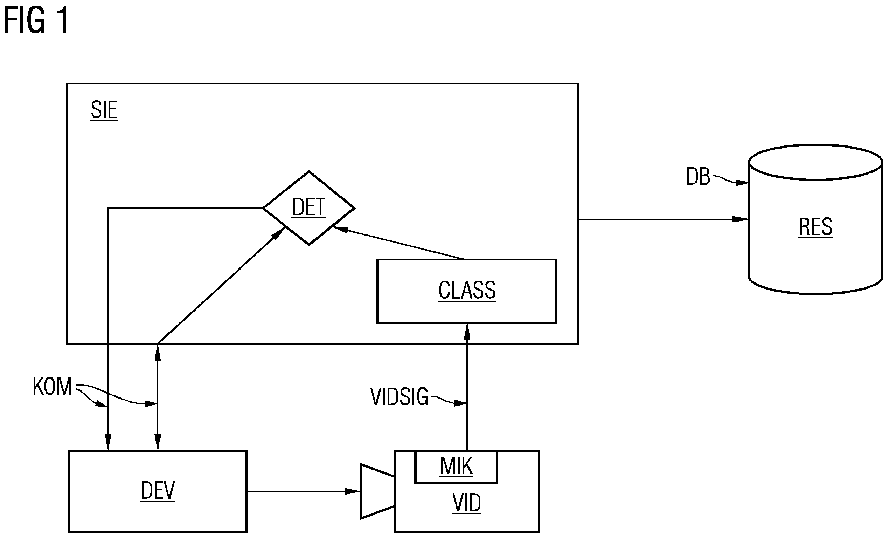

Das in Fig. 1 dargestellte Ablaufdiagramm zeigt einen Ablauf eines IT-Sicherheitstests eines Geräts DEV in Gestalt eines Fertigungsgeräts, etwa eines programmiergesteuerten Fräsers, einer mittels eines IoT-Netzwerks vernetzten Fertigungsanlage MAN. Alternativ kann das Gerät auch ein Logistikgerät, etwa ein mobiler Lagerroboter, einer mittels eines IoT-Netzwerks vernetzten Logistikanlage oder ein Wartungsgerät, etwa ein Wartungsroboter, einer mittels eines IoT-Netzwerks vernetzten Wartungsanlage sein.

Das Gerät DEV weist zum einen eine Kommunikationsschnittstelle KOM zur Datenverbindung auf, mittels welcher das Gerät DEV programmiergesteuert werden kann.

Das Gerät DEV weist zusätzlich eine Benutzerschnittstelle USE auf, mittels welcher ein Benutzer einen Betriebsmodus erkennen kann, hier beispielsweise einen Produktivmodus, in welchem das Gerät DEV zur Fertigung eines Produkts mittels der Kommunikationsschnittstelle KOM programmtechnisch angesteuert wird, einen Wartungsmodus, in welchem eine Softwareaktualisierung des Geräts DEV erfolgen kann und einen Ruhezustand, in welchem das Gerät über die Kommunikationsschnittstelle KOM nicht ansprechbar ist.

Mittels der Kommunikationsschnittstelle KOM wird das Gerät DEV bei einem IT-Sicherheitstest des Geräts DEV von einer Testplattform SIE mit einer Reihe von Fuzzing-Eingabedaten beschickt und ein Datenfeedback des Geräts DEV beobachtet. In einem sicheren Normalbetrieb gibt das Gerät DEV mittels der Kommunikationsschnittstelle KOM Bestätigungsdaten zur Entgegennahme der Eingangsdaten aus und übermittelt in regelmäßigen Zeitabständen Dokumentationsdaten zum Betrieb des Geräts DEV. Das Datenfeedback setzt sich folglich im Normalzustand des Geräts DEV aus Feedbackdaten, umfassend diese Bestätigungsdaten und Dokumentationsdaten, zusammen.

Die Testplattform SIE empfängt dieses Datenfeedback und wertet dieses Datenfeedback aus. Dabei wird das Datenfeedback mit den dem Gerät übermittelten Fuzzing-Eingabedaten in Beziehung gesetzt und Abweichungen vom vorgesehenen Normalbetrieb können mittels der Testplattform SIE auf IT-Sicherheitslücken hin überprüft werden.

Wenn die Fuzzing-Eingabedaten jedoch das Gerät DEV von Normalbetrieb in einen gestörten Gerätezustand versetzen, so stellt das Gerät DEV im gezeigten Ausführungsbeispiel seinen Datenfeedback ein. Mittels der Kommunikationsschnittstelle KOM werden folglich von der Testplattform SIE keine Feedbackdaten mehr erhalten. Das Datenfeedback ist somit durch fehlende Feedbackdaten charakterisiert.

Die Testplattform SIE weist jedoch nicht allein eine Kommunikationsschnittstelle KOM auf, sondern zusätzlich verfügt die Testplattform SIE über Erfassungsmittel in Gestalt einer Videokamera VID und eines Mikrofons MIK.

Mittels der Videokamera VID wird die Benutzerschnittstelle USE des Geräts DEV gefilmt. Wenn das Gerät DEV seinen Datenfeedback einstellt, so wird das von der Videokamera VID aufgenommene Bild der Benutzerschnittstelle USE des Geräts DEV ausgewertet. Die Benutzerschnittstelle kann ein Display aufweisen, in welchem eine Fehlermeldung in Gestalt eines Benachrichtigungsfensters eines Betriebssystems des Geräts DEV erscheint. Die Videokamera VID übermittelt das Bild des Displays mit dem Benachrichtigungsfenster mittels einer Videosignalverbindung VIDSIG an die Testplattform SIE.

Eine Klassifizierungseinrichtung CLASS der Testplattform SIE ist darauf trainiert, die Bilder des Displays mit dem Benachrichtigungsfenster auszuwerten und zu klassifizieren. So kann das Benachrichtigungsfenster eine Fehlermeldung enthalten, welche auf einen Fehlerzustand des Geräts DEV hinweist, beispielsweise eine Fehlermeldung "Gerät antwortet nicht. Weiterbetrieb erfordert Neustart". Die Klassifizierungseinrichtung CLASS der Testplattform SIE ist daraufhin trainiert, die Benachrichtigungsfenster zu erkennen und den Textinhalt zu erfassen. Dazu weist die Klassifizierungseinrichtung ein neuronales Netz auf, welches in an sich bekannter Weise ein entsprechendes Training erfahren hat.

Die Klassifizierungseinrichtung CLASS übermittelt nun die anhand der erfassten Textinhalte klassifizierten Bildsignale, d. h. eine den erfassten Bildsignalen zugeordnete Klasse, an eine Zustandsermittlungseinrichtung DET, welche den erfassten Textinhalt der Benachrichtigungsfenster einem Gerätezustand des Geräts DEV zuordnet.

Analog zu den Bildern der Videokamera nimmt das Mikrofon MIK Tonsignale der Benutzerschnittstelle USE des Geräts DEV auf. Die Benutzerschnittstelle USE des Geräts DEV gibt einen Warnton aus, wenn das Gerät DEV seinen Datenfeedback einstellt. Das Mikrofon MIK übermittelt dieses Tonsignal ebenfalls über die Videosignalverbindung VIDSIG an die Testplattform SIE. Die Klassifikationseinrichtung CLASS klassifiziert zusätzlich auch die Tonsignale und übermittelt die Klassifikation des Tonsignals, d. h. eine den erfassten Tonsignalen zugeordnete Klasse, an die Zustandsermittlungseinrichtung DET. Die Zustandsermittlungseinrichtung DET hält in einem internen Speicher eine Zuordnungsvorschrift bereit, die die klassifizierten Tonsignale und Bildsignale, also die Klassen der Tonsignale und der Bildsignale einem internen Gerätezustand des Geräts DEV zuordnet. Anhand des zugeordneten Gerätezustands wird das Datenfeedback und werden die Fuzzing-Eingabedaten analysiert. So kann beispielsweise mittels der Testplattform SIE in an sich bekannter Weise geschlossen werden, welche Fuzzing-Eingabedaten zu dem mittels der Zustandsermittlungseinrichtung DET ermittelten Gerätezustand führen und welches Datenfeedback einem solchen Gerätezustand mit ausbleibenden Feedbackdaten jeweils typischerweise unmittelbar vorangeht. Diese Testergebnisse RES, auf welche mittels der Testplattform SIE geschlossen wird, werden einer Ergebnisdatenbank DB übermittelt, welche die Testergebnisse RES speichert und dokumentiert.

Zusätzlich wird der derart ermittelte Gerätezustand herangezogen, um den Test fortzusetzen. So können die Fuzzing-Eingabedaten, welche zu dem gestörten Gerätezustand geführt haben, beispielsweise abgewandelt werden, sodass in weiteren Testläufen ein solcher gestörter Gerätezustand vermieden werden kann. In weiteren Ausführungsbeispielen können die Fuzzing-Eingabedaten auch dergestalt variiert werden, dass abstrahiert werden kann, welche Art von Fuzzing-Eingabedaten zu einem gestörten Gerätezustand führen.

Ferner kann in einem nicht eigens dargestellten Ausführungsbeispiel die Testplattform SIE mit einem Aktor in Gestalt eines Roboterfingers signalverbunden sein, welcher eine Rücksetztaste der Benutzerschnittstelle USE des Geräts DEV drücken kann. Alternativ kann in weiteren Ausführungsbeispielen die Benutzerschnittstelle einen Touchscreen aufweisen und der Aktor kann ein Rücksetzfeld des Touchscreens bedienen. In weiteren Ausführungsbeispielen kann der Aktor ein Stromkreisunterbrecher sein, welcher einen Stromkreis des Geräts DEV unterbricht und/oder ein Kurzschlusselement sein, welches einen Kurzschluss des Geräts DEV hervorruft. So kann die Testplattform SIE in solchen Fällen, in welchen ein gestörter Gerätezustand mit ausbleibenden Feedbackdaten auftritt, ein Rücksetzsignal an den Roboterfinger übergeben, welcher daraufhin die Rücksetztaste des Benutzerschnittstelle USE drückt. Somit kann das Gerät DEV neugestartet werden und der IT-Sicherheitstest kann mit der Testplattform SIE fortgesetzt werden.

## Patentansprüche

1. Verfahren zur Durchführung eines IT-Sicherheitstests eines Geräts (DEV) mittels einer Datenverbindung (KOM), insbesondere Netzwerkverbindung, bei welchem
- der IT-Sicherheitstest des Geräts (DEV) durchgeführt wird,
- bei der Durchführung des IT-Sicherheitstests ein Datenfeedback des Geräts mittels der Datenverbindung (KOM) erfasst wird,
- ein Gerätezustand des Geräts (DEV) zusätzlich optisch und/oder akustisch erfasst wird,
- das Datenfeedback unter Berücksichtigung des erfassten Gerätezustands ausgewertet wird.

2. Verfahren nach Anspruch 1, bei welchem optisch und/oder akustisch mittels mindestens eines Erfassungsmittels (MIK, VID), insbesondere mittels mindestens einer Kamera (VID) und/oder mittels mindestens eines Mikrofons (MIK), erfasst wird.

3. Verfahren nach einem der vorhergehenden Ansprüche, bei welchem der Gerätezustand des Geräts (DEV) derart optisch und akustisch erfasst wird, dass das Gerät (DEV) auf periodische Signale und/oder eine bestimmte Kombination von optischen und/oder akustischen Signalen und Datenfeedback überwacht wird.

4. Verfahren nach einem der vorhergehenden Ansprüche, bei welchem das Datenfeedback Feedbackdaten umfasst und/oder die Information umfasst, ob Feedbackdaten erhalten werden oder ob keine oder weniger Feedbackdaten erhalten werden als erwartet.

5. Verfahren nach dem vorhergehenden Anspruch, bei welchem der erfasste Gerätezustand herangezogen wird, eine Sicherheitsinformation aus dem Datenfeedback in Abhängigkeit des Gerätezustands abzuleiten.

6. Verfahren nach dem vorhergehenden Anspruch, bei welchem der erfasste Gerätezustand herangezogen wird, das Gerät (DE) in Abhängigkeit des Gerätezustands zu bedienen, insbesondere das Gerät (DEV) zurückzusetzen.

7. Verfahren nach einem der vorhergehenden Ansprüche, bei welchem der erfasste Gerätezustand herangezogen wird, um das Gerät (DEV) in einen sicheren Betriebsmodus zu versetzten und/oder einer Softwareaktualisierung zu unterziehen und/oder in einen anderen Betriebszustand zu versetzen und/oder außer Betrieb zu nehmen und/oder auszuschalten oder in einen Ruhezustand zu versetzen und/oder umzukonfigurieren.

8. Verfahren nach einem der vorhergehenden Ansprüche, bei welchem der erfasste Gerätezustand herangezogen wird, um weitere, insbesondere vom Gerätezustand abgeleitete, IT-Sicherheitstests durchzuführen.

9. Verfahren nach einem der vorhergehenden Ansprüche, bei welchem der Gerätezustand erfasst wird, indem ein akustisches Signal des Geräts (DEV), insbesondere ein Alarmsignal des Geräts (DEV) und/oder ein optisches Signal des Geräts (DEV), insbesondere eine Anzeige des Geräts (DEV), erfasst wird.

10. System zur Durchführung eines IT-Sicherheitstests eines Geräts (DEV) zur Durchführung eines Verfahrens nach einem der vorhergehenden Ansprüche,
mit einer Kommunikationsschnittstelle (KOM) für eine Datenverbindung mit dem Gerät (DE),
mit einer Testeinrichtung zur Durchführung des IT-Sicherheitstests, welche ausgebildet ist, ein Datenfeedback des Geräts (DE) zu erfassen,
mit mindestens einem Erfassungsmittel (MIK, VID) zur optischen und/oder akustischen Erfassung des Gerätezustands, mit einer Auswerteinrichtung (DET), welche ausgebildet ist, das Datenfeedback unter Berücksichtigung des erfassten Gerätezustands auszuwerten.

11. System nach dem vorhergehenden Anspruch, welches zur Durchführung eines IT-Sicherheitstests eines Geräts (DE) mit einer graphischen und/oder akustischen Benutzerschnittstelle ausgebildet ist, wobei das mindestens eine Erfassungsmittel zur Erfassung der Benutzerschnittstelle ausgebildet ist.

12. System nach dem vorhergehenden Anspruch, bei welchem das mindestens eine Erfassungsmittel mindestens eine Kamera (VID) und/oder mindestens ein Mikrofon (MIK) aufweist.

13. System nach einem der vorhergehenden Ansprüche, aufweisend mindestens einen Aktor, ausgebildet zur Bedienung des Geräts (DE) in Abhängigkeit des Gerätezustands.

14. System nach einem der vorhergehenden Ansprüche, welches zur Durchführung eines IT-Sicherheitstests eines Geräts (DEV) mit mindestens einer Benutzerschnittstelle ausgebildet ist, wobei der Aktor eingerichtet ist, die mindestens eine Benutzerschnittstelle des Geräts (DEV) zu bedienen.

15. Fertigungsanlage und/oder Wartungsanlage und/oder Logistikanlage mit einem System nach einem der vorhergehenden Ansprüche.
